# DEMANDE DE BREVET EUROPEEN

(11) **EP 0 656 281 A1**
(43) Date de publication de la demande: **07.06.1995**
(21) Numéro de dépôt: 94402505.5
(22) Date de dépôt: 07.11.1994
(51) Int. Cl.: B60Q 3/02

(54) **Eclairage d'habitacle à tube fluorescent**

(30) Priorité: 09.11.1993 FR 9313358
(71) Demandeur: VALEO ELECTRONIQUE, 94000 Creteil (FR)
(72) Inventeur: Pons, Sylvain, F-75019 Paris (FR); Segaud, Daniel, F-75012 Paris (FR)
(74) Mandataire: Martin, Jean-Jacques

(57) **Abrégé**

La présente invention concerne un dispositif d'éclairage d'habitacle de véhicule automobile comprenant une source lumineuse allongée, disposée à l'intérieur d'un boîtier.

Selon l'invention, le dispositif d'éclairage d'habitacle de véhicule automobile comporte :
- deux fenêtres transparentes (13, 14) au flux lumineux émis par la source (11), distantes l'une de l'autre, dont une fenêtre supérieure (13) par laquelle est émis un rayonnement lumineux suivant une direction généralement horizontale, et une fenêtre inférieure (14) par laquelle est émis un rayonnement généralement descendant,
- un premier récupérateur directif de flux lumineux (12) disposé entre deux premiers bords respectifs desdites fenêtres,
- un deuxième récupérateur directif de flux lumineux (15, 16) disposé entre les deux autres bords respectifs desdites fenêtres, lesdits récupérateurs directifs de flux lumineux (12, 15, 16) présentant des formes qui se combinent pour guider le flux lumineux émis par la source vers lesdites fenêtres transparentes.

## Description

La présente invention concerne un nouveau dispositif d'éclairage d'habitacle de véhicule automobile.

Actuellement, on connaît de l'état de la technique, un dispositif d'éclairage d'habitacle utilisé notamment comme plafonnier ou bien comme éclairage de courtoisie, comprenant une source lumineuse disposée à l'intérieur d'un boîtier comportant une fenêtre transparente au travers de laquelle la source lumineuse émet un faisceau lumineux vers l'intérieur de l'habitacle.

L'inconvénient principal d'un tel dispositif est que pour éclairer correctement l'intérieur de l'habitacle, le dispositif émet un faisceau lumineux en direction des passagers en les éblouissant.

L'invention vise à proposer un nouveau dispositif d'éclairage d'habitacle de véhicule automobile comprenant une source lumineuse allongée, disposée à l'intérieur d'un boîtier, qui permet d'obtenir un éclairage d'ambiance dans l'habitacle en projetant un faisceau lumineux vers le plafond et vers l'espace d'activité des passagers sans les éblouir.

Plus particulièrement, selon l'invention le boîtier du dispositif d'éclairage comporte :
- deux fenêtres transparentes au flux lumineux émis par la source, distantes l'une de l'autre, dont une fenêtre supérieure par laquelle est émis un rayonnement lumineux suivant une direction généralement horizontale, et une fenêtre inférieure par laquelle est émis un rayonnement généralement descendant,
- un premier récupérateur directif de flux lumineux disposé entre deux premiers bords respectifs desdites fenêtres,
- un deuxième récupérateur directif de flux lumineux disposé entre les deux autres bords respectifs desdites fenêtres,

lesdits récupérateurs directifs de flux lumineux présentant des formes qui se combinent pour guider le flux lumineux émis par la source vers lesdites fenêtres transparentes.

Selon un mode de réalisation particulièrement avantageux de l'invention, la source lumineuse allongée est un tube fluorescent.

La description qui va suivre en regard des dessins annexés donnés à titre d'exemples non limitatifs, fera bien comprendre en quoi consiste l'invention et comment elle peut être réalisée.
- La figure 1 est une vue schématique de côté d'un mode de réalisation du dispositif d'éclairage selon l'invention.
- La figure 2 est une vue en coupe transversale de côté du dispositif d'éclairage de la figure 1.
- La figure 3 est une vue en coupe transversale de côté d'un autre mode de réalisation du dispositif d'éclairage selon l'invention.
- La figure 4 est une vue en coupe transversale de côté d'une variante de réalisation du dispositif de la figure 3.

De façon préliminaire, on notera que d'une figure à l'autre les parties identiques ou similaires portent les mêmes signes de référence et ne seront pas décrites à chaque fois.

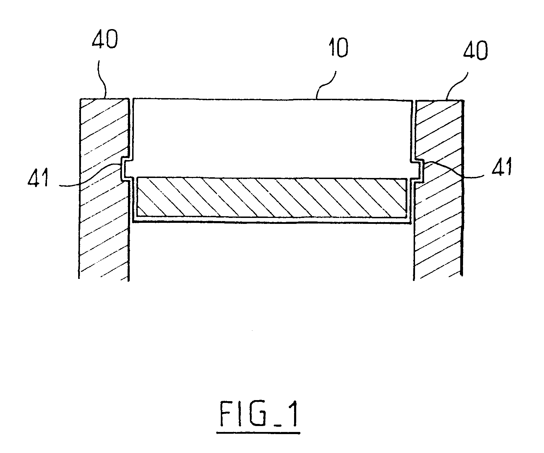

Sur la figure 1, on a représenté un mode de réalisation d'un dispositif d'éclairage d'un habitacle 20 d'un véhicule automobile, qui comprend un tube fluorescent 11 disposé à l'intérieur d'un boîtier 10. Ce boîtier 10 est monté de manière pivotante dans des paliers 41 d'un support 40 destiné à être monté sur une partie du véhicule.

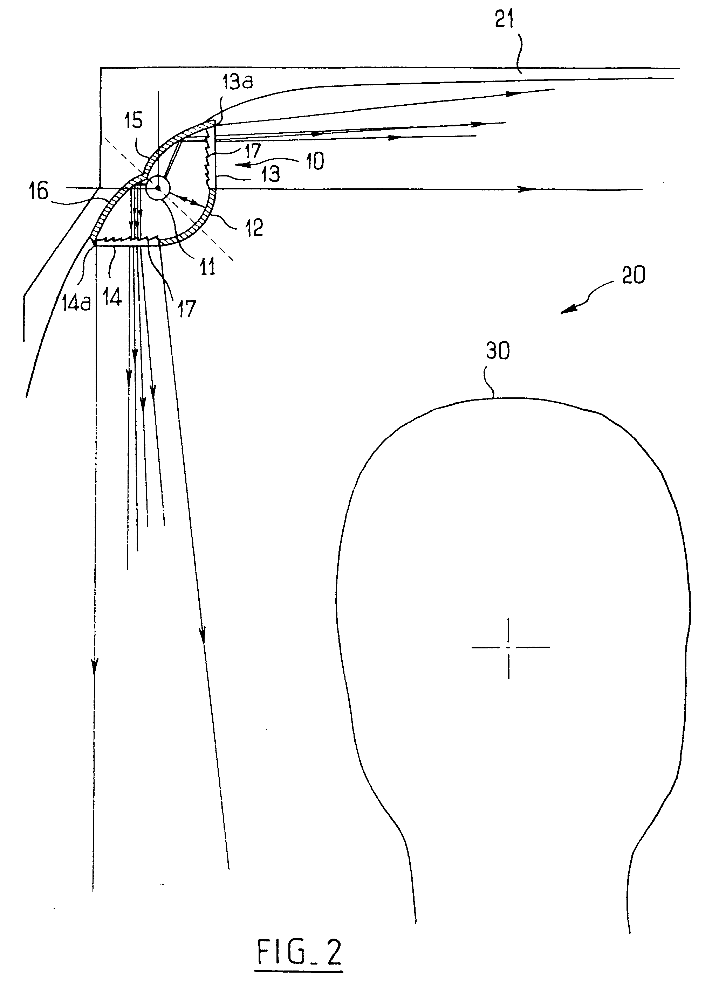

Le boîtier 10 comporte un premier récupérateur directif de flux 12 disposé entre le tube fluorescent 11 et l'espace d'activité de l'habitacle 20 où se trouvent des passagers 30. Ce premier récupérateur de flux 12 est ici constitué par un miroir cylindrique tourné vers le tube fluorescent 11 et généralement coaxial avec ledit tube, masquant en partie ce dernier. En outre, le boîtier 10 comporte deux fenêtres 13, 14 transparentes au flux lumineux, une fenêtre supérieure 13 et une fenêtre inférieure 14 placées à distance l'une de l'autre, de part et d'autre du premier récupérateur de flux 12. Lesdites fenêtres 13, 14 s'étendent chacune à partir d'un bord du premier récupérateur de flux 12, et sont orientées de manière sensiblement perpendiculaire l'une par rapport à l'autre. Comme on peut le voir sur la figure 2, les fenêtres transparentes 13, 14 comprennent des stries 17 régulièrement réparties sur leur surface intérieure tournée du côté du tube fluorescent 11. Ces stries 17 permettent de traiter le flux lumineux qui traverse lesdites fenêtres en modifiant notamment sa direction. Les stries favorisent une optimisation de l'éclairage à l'intérieur de l'habitacle. Il convient de noter que dans d'autres modes de réalisation non représentés ces stries peuvent être remplacées par d'autres moyens de traitement tels que des prismes, des prismes striés, des tores ou bien des billes.

Par ailleurs, le boîtier 10 comporte un deuxième récupérateur directif de flux lumineux comprenant deux réflecteurs 15, 16 associés. Suivant le mode de réalisation représenté, ces deux réflecteurs 15, 16 présentent ici la forme d'un cylindre parabolique dont la ligne focale est voisine de la source et sont disposés entre deux bords 13a, 14a respectifs des fenêtres transparentes 13, 14 de manière opposée au premier récupérateur de flux 12. Les deux réflecteurs 14, 16 sont raccordés par un bord dans une partie centrale au voisinage du tube fluorescent 11.

Du point de vue fonctionnel, le premier récupérateur directif de flux 12 est destiné à réfléchir vers l'intérieur du boîtier 10 le flux lumineux émis par le tube fluorescent 11 en direction des passagers 30 placés à l'intérieur de l'espace d'activité de l'habitacle 20. Les réflecteurs 15, 16 sont aptes à réfléchir le flux lumineux émis par le tube fluorescent 11 et le flux lumineux réfléchi par le premier récupérateur de flux 12 afin de diriger ces flux en direction des fenêtres transparentes 13, 14. Le flux lumineux traversant lesdites fenêtres 13, 14 est modifié au moyen des stries disposées sur les surfaces intérieures desdites fenêtres. Ainsi, ledit dispositif permet de former deux faisceaux lumineux suivant deux directions essentiellement perpendiculaires. Un premier faisceau est émis suivant une direction essentiellement horizontale dirigée vers le plafond 121 de l'habitacle 20. Un deuxième faisceau est dirigé essentiellement suivant un axe vertical vers l'espace d'activité de l'habitacle 20 sans éblouir les passagers 30.

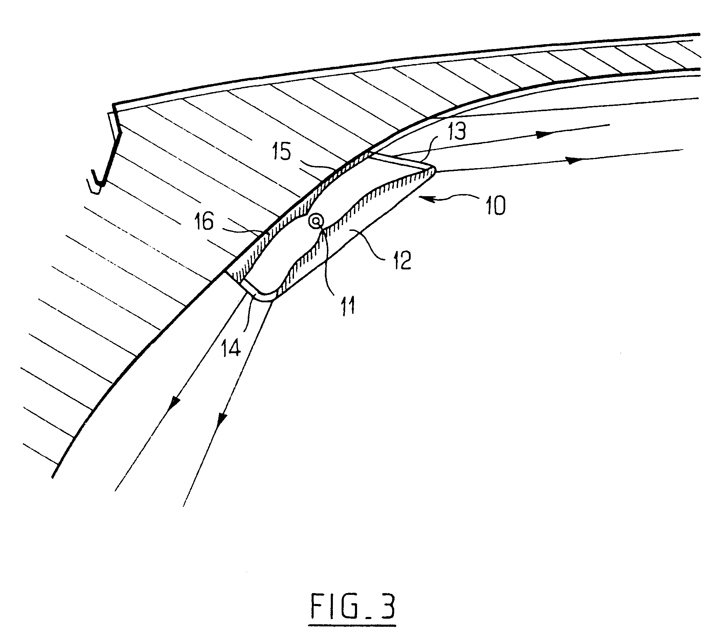

Sur la figure 3, on a représenté un autre mode de réalisation du dispositif d'éclairage dans lequel les premier et deuxième récupérateurs directifs de flux 12, 15, 16 du boîtier comportent des surfaces réfléchissantes cylindriques présentant des profils déterminés par le calcul à l'aide d'un ordinateur. Les surfaces réfléchissantes desdits récupérateurs se combinent de façon à diriger le flux lumineux émis par le tube fluorescent 11 vers les fenêtres transparentes supérieure et inférieure 13, 14, ici orientées de façon sensiblement parallèle l'une par rapport à l'autre. Les fenêtres transparentes 13, 14 de sortie du flux lumineux comportent, dans ce cas typique, des faces externes et internes lisses ou légèrement diffusantes.

Le rayonnement lumineux sortant par la fenêtre supérieure 13 est dirigé selon une direction sensiblement horizontale et le rayonnement lumineux sortant par la fenêtre inférieure 14 présente une direction essentiellement verticale descendante.

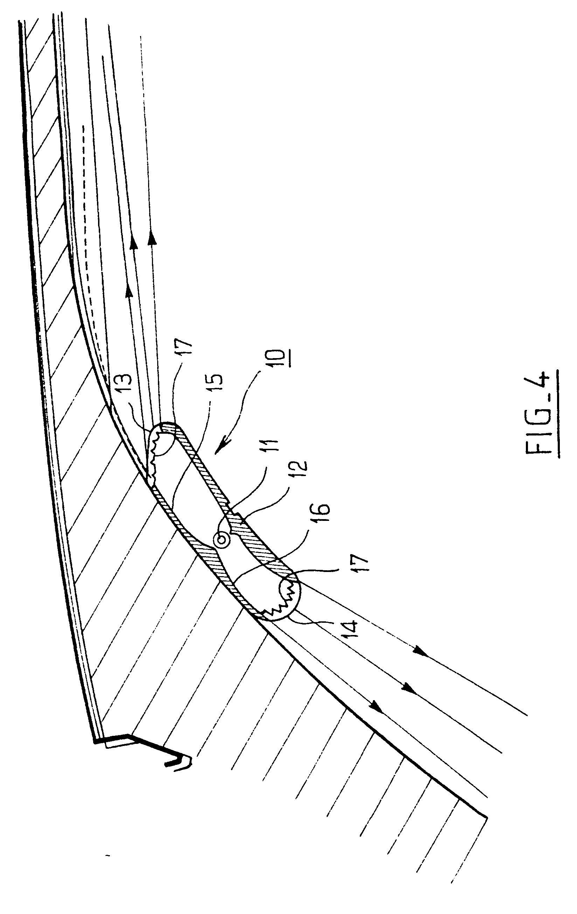

Selon une variante de réalisation représentée sur la figure 4, les fenêtres transparentes 13, 14 comprennent des stries 17 régulièrement réparties sur la surface intérieure tournée du côté du tube fluorescent 11. Là aussi, il convient de noter que dans d'autres modes de réalisation non représentés ces stries peuvent être placées sur les faces externes des fenêtres et peuvent être remplacées par d'autres moyens de traitement tels que des prismes, des tores ou bien encore des billes.

Bien entendu, la présente invention n'est nullement limitée à la forme de réalisation décrite et représentée, mais l'homme du métier saura y apporter toute variante conforme à son esprit.

## Revendications

1. Dispositif d'éclairage d'habitacle de véhicule automobile comprenant une source lumineuse allongée (11), disposée à I'intérieur d'un boîtier (10), caractérisé en ce que le boîtier (10) comporte :
- deux fenêtres transparentes (13, 14) au flux lumineux émis par la source (11), distantes l'une de l'autre, dont une fenêtre supérieure (13) par laquelle est émis un rayonnement lumineux suivant une direction généralement horizontale, et une fenêtre inférieure (14) par laquelle est émis un rayonnement généralement descendant,
- un premier récupérateur directif de flux lumineux (12) disposé entre deux premiers bords respectifs desdites fenêtre (13, 14),
- un deuxième récupérateur directif de flux lumineux (15, 16) disposé entre les deux autres bords respectifs desdites fenêtres (13, 14),
lesdits récupérateurs directifs de flux lumineux (12, 15, 16) présentant des formes qui se combinent pour guider le flux lumineux émis par la source (11) vers lesdites fenêtres transparentes (13, 14).

2. Dispositif d'éclairage selon la revendication 1, caractérisé en ce que le premier récupérateur directif de flux (12) est disposé entre la source lumineuse (11) et une région d'activité de l'habitacle où se trouvent des passagers, et est apte à réfléchir vers l'intérieur du boîtier (10) le flux lumineux émis par la source lumineuse en direction des passagers, et en ce que le deuxième récupérateur directif de flux (15, 16) est disposé de manière opposée au premier récupérateur directif de flux (12), et est apte à réfléchir d'une part le flux lumineux émis par la source (11) et d'autre part le flux réfléchi par le premier récupérateur de flux (12) pour les diriger vers les fenêtres transparentes.

3. Dispositif d'éclairage selon l'une des revendication 1 ou 2, caractérisé en ce que les premier et deuxième récupérateurs directifs de flux lumineux (12, 15, 16) comportent des surfaces réfléchissantes cylindriques présentant des profils déterminés par le calcul.

4. Dispositif d'éclairage selon l'une quelconque des revendications 1 à 3, caractérisé en ce que le deuxième récupérateur directif de flux (15, 16) comprend deux réflecteurs (15, 16) jointifs par un de leurs bords dans une région centrale voisine de la source lumineuse (11).

5. Dispositif d'éclairage selon l'une quelconque des revendications 1 à 4, caractérisé en ce que les deux fenêtres transparentes (13, 14) sont orientées de façon essentiellement transversale l'une par rapport à l'autre.

6. Dispositif d'éclairage selon l'une quelconque des revendications 1 à 4, caractérisé en ce que les deux fenêtres transparentes (13, 14) sont orientées de façon essentiellement parallèle l'une par rapport à l'autre.

7. Dispositif d'éclairage selon l'une quelconque des revendications 1 à 6, caractérisé en ce que chaque fenêtre (13, 14) comporte des moyens de traitement (17) du flux lumineux qui traverse lesdites fenêtres.

8. Dispositif d'éclairage selon la revendication 7, caractérisé en ce que les moyens de traitement (17) du flux lumineux sont positionnés sur une partie intérieure tournée du côté de la source lumineuse (11) de chaque fenêtre (13, 14)

9. Dispositif d'éclairage selon l'une des revendications 7 ou 8, caractérisé en ce que les moyens de traitement sont des stries (17) réparties sur les surfaces intérieures des fenêtres (13, 14).

10. Dispositif d'éclairage selon l'une quelconque des revendications 1 à 9, caractérisé en ce qu'il comporte un support (40) fixé sur une partie du véhicule et sur lequel le boîtier (10) est monté pivotant.

11. Dispositif d'éclairage selon l'une quelconque des revendications 1 à 10, caractérisé en ce que le premier récupérateur directif de flux (12) est un miroir cylindrique généralement coaxial avec la source lumineuse (11).

12. Dispositif d'éclairage selon l'une quelconque des revendications 1 à 11, caractérisé en ce que le deuxième récupérateur directif de flux (15, 16) comporte des cylindres paraboliques dont la ligne focale est voisine de la source lumineuse (11).
